Europäisches Patentamt

**European Patent Office**

**Office européen des brevets**

(19)

(11) Numéro de publication: **0 161 982**
A2

(12) **DEMANDE DE BREVET EUROPEEN**

(21) Numéro de dépôt: 85400858.8

(22) Date de dépôt: 02.05.85

(51) Int. Cl.⁴: **B 29 C 67/22,** E 04 C 2/20,
B 32 B 27/00
// B29L31:10, B29K105:06

(30) Priorité: **03.05.84 FR 8406847**
**28.09.84 FR 8414963**

(43) Date de publication de la demande: **21.11.85**
**Bulletin 85/47**

(84) Etats contractants désignés: **AT BE CH DE GB IT LI LU**
**NL SE**

(71) Demandeur: **Guilhem, Jacques Marie, Domaine de Val**
**Martin, F-06561 Valbonne Alpes Maritimes (FR)**

(72) Inventeur: **Guilhem, Jacques Marie, Domaine de Val**
**Martin, F-06561 Valbonne Alpes Maritimes (FR)**

(74) Mandataire: **Cabinet BERT, DE KERAVENANT &**
**HERRBURGER, 115, Boulevard Haussmann,**
**F-75008 Paris (FR)**

(54) Procédé de fabrication de produits, notamment de panneaux composites, constitués au moins en partie de matériau expansé, ainsi que panneaux composites plans obtenus par la mise en oeuvre de ce procédé.

(57) a) Procédé de fabrication de produits, notamment de panneaux composites, constitués au moins en partie de matériau expansé, ainsi que panneaux composites plans obtenus par la mise en œuvre de ce procédé;

b) procédé, caractérisé en ce que l'on dépose le matériau par coulée sous forme liquide sur la partie inférieure d'une feuille inférieure souple moulée en forme de U à bords relevés de manière à définir un canal de transfert continu;

c) l'invention s'applique à un procédé de fabrication de produits constitués au moins en partie de matériau expansé.

1

" Procédé de fabrication de produits, notamment de panneaux composites, constitués au moins en partie de matériau expansé, ainsi que panneaux composites plans obtenus par la mise en oeuvre de ce procédé "

La présente invention se rapporte à un procédé de fabrication de produits, notamment de panneaux composites plans constitués au moins en partie de matériau expansé.

L'invention se rapporte également à un panneau obtenu par la mise en oeuvre de ce procédé.

La présente invention a pour objet un procédé de fabrication de produits composites constitués au moins en partie par un matériau organique ou minéral expansé tel que du polyuréthane, du béton ou, plus généralement, un matériau qui, initialement, sous forme liquide devient moussant sous l'action d'un agent spécifique, puis durcit.

Les produits tels que décrits ci-dessus sont utilisés à des fins d'isolation thermique ou phonique, le plus habituellement sous forme de panneaux plans. La fabrication de tels panneaux est bien connue : elle consiste à couler le produit liquide et à l'étaler sur un support entraîné par translation à vitesse constante aussi uniformément que possible. En cours d'expansion, le produit passe successivement de l'état liquide à l'état "crémeux" puis à l'état de mousse molle et enfin à l'état de mousse dure.

Dans la technique classique, le réactif liquide est déposé sur une feuille support par des mouvements transversaux par rapport au défilement de la feuille support, de la tête de coulée du liquide, de sorte que la répartition initiale n'est pas uniforme.

Il se forme ainsi des emprisonnements de gaz et des bourrelets se traduisant par des festons latéraux et les panneaux obtenus ne sont pas homogènes, ce qui se traduit par des chutes et des pertes. Cela résulte en particulier de ce que l'expansion se produit dans un premier temps dans une direction perpendiculaire au support pour occuper toute la hauteur disponible, puis, latéralement pour remplir l'espace resté libre et en particulier les bords.

Différentes solutions ont déjà été proposées pour tenter de remédier à ces inconvénients. Le brevet français n° 1 525 046 décrit un procédé dans lequel on coule le mélange liquide à partir d'une ou plusieurs têtes de coulée fixes, le mélange étant réparti uniformément par la pression de rouleaux sur la feuille support, une seconde feuille étant maintenue parallèlement à la première pour former une sorte de coffrage pour l'expansion de la mousse. Afin de résoudre le problème des bords, les deux feuilles parallèles sont réunies bord à bord par collage, soudure, sertissage, de manière à former une enceinte close. Ces feuilles constituent les parements des panneaux, le matériau expansé en constituant l'âme.

Le calibrage des panneaux est réalisé par des moyens mécaniques. Le complexe pénètre dans un premier dispositif conformateur, puis, dans un convoyeur où s'effectue la mise en forme et la polymérisation des panneaux. Les dispositifs convoyeur et conformateur se présentent sous forme de bandes continues qui appliquent les parements sur le matériau en expansion. En raison de la mauvaise planéité due à des tension longitudinales des feuilles constituant les parements, des plis ont tendance à se former, notamment au point de contact du panneau en formation avec la bande supérieure du convoyeur et avec le panneau de calibrage, en particulier sur le parement supérieur. Afin d'éviter la formation de tels plis, le brevet français n° 71 04 913 propose d'utiliser des bandes transporteuses de convoyage et de calibrage constituées d'un matériau mince et flexible tel que du téréphtalate de diéthylèneglycol souple et déformable dans toutes les directions, sous forme de bandes sans fin.

Malheureusement, le problème des bords reste entier et il est souvent nécessaire de les raboter latéralement pour obtenir des panneaux homogènes.

En outre, il n'est pas possible d'inclure dans le produit moussant des éléments continus ou non accroissant la stabilité dimensionnelle ou renforçant l'élément final. Il n'est pas non plus possible d'incorporer des parements épais sur ou sous la mousse, à l'intérieur de la gaine.

Dans la technique antérieure, on a cherché à enfermer le matériau moussant dans une structure rigide pour qu'il prenne la forme désirée en le forçant à l'intérieur de cette structure.

La présente invention repose, au contraire, sur l'idée que l'expansion doit, d'un point de vue mécanique, se dérouler librement, l'action mécanique proprement dite ne se produisant qu'au niveau de la mousse molle.

Bien entendu, l'expansion proprement dite est contrôlée à l'aide d'un ensemble de paramètres physicochimiques qui dépendent, en particulier, de la nature du matérieur à expanser.

Conformément aux brevets français n° 83 00 027 et 84 02 780, on a imaginé de constituer une gaine continue soit par pliage en accordéon, soit par soudure des bords de deux films souples thermoplastiques et introduction du liquide sur la partie inférieure de la gaine, le dessus de la gaine servant d'élément de calibrage de la mouse en fin d'expansion.

La présente invention se rapporte à l'action mécanique de conformation des produits, en tenant compte du fait que les vitesses de réaction conduisent à des ajustements des moyens mécaniques impliqués. Il ne sera pas question des moyens de régulation contrôlée des températures indispensables du fait que les réactions d'expansion sont, en général, endo ou exothermiques.

La présente invention a donc pour objet un procédé permettant la fabrication de produits composites constitués au moins en partie de matériau expansé susceptible de remédier aux inconvénients des procédés connus susmentionnés.

La présente invention cherche, en outre, à mettre au point un procédé dont la mise en oeuvre est d'une grande simplicité.

A cet effet, l'invention propose un procédé du type ci-dessus, permettant la fabrication d'un produit expansé à partir d'une résine liquide, caractérisé en ce que l'on dépose le liquide par coulée sur la partie inférieure d'une feuille inférieure souple thermoformable moulée en continu en forme de U à bords relevés, constituant un canal de transfert continu.

Selon une autre caractéristique de l'invention, on dépose une feuille supérieure souple sur les bords relevés de la feuille inférieure en forme de U, et on soude ces deux feuilles lorsque le produit expansé a atteint une structure molle.

Cette opération de soudure est généralement effectuée selon l'invention au moyen de deux galets chauffants ; on obtient ainsi une gaine ou un caisson qui progresse en direction longitudinale par un effet de traction exercé sur le produit final.

La feuille supérieure peut être ou non de même nature que la feuille inférieure pourvu que celle-ci puisse être développée ou soudée sur les bords de la feuille inférieure en forme de U. A titre d'exemple, on peut utiliser des matériaux aussi différents qu'une matière thermoplastique, du papier, une feuille de métal mince, un feutre, etc..

Par ailleurs, le canal continu a généralement une section rectangulaire ; on peut, cependant, modifier sa forme pendant la période d'expansion de la mousse, alors que celle-ci est encore molle, soit sur ses faces, soit sur ses bords, en exerçant les pression appropriées grâce, par exemple, à des rouleaux horizontaux ou à des galets latéraux chauffants.

Selon une caractéristique essentielle de l'invention, le canal de transfert continu en forme de U à bords relevés constitue un module susceptible d'être reproduit par juxtaposition de plusieurs modules de même type ; à cet effet, on conforme la feuille inférieure en double, triple ou n éléments de manière à obtenir non pas un canal de transfert, mais deux, trois ou n canaux alimentés chacun par une tête de coulée de même débit chacune, la feuille supérieure étant soudée aux deux bords de la feuille inférieure.

La largeur de chacun des n canaux doit être choisie de manière à obtenir une bonne répartition de la résine en épaisseur dans sa phase liquide.

Selon l'invention, les n canaux peuvent également être obtenus non pas par formage de la feuille inférieure, mais à partir de plusieurs feuilles inférieures en forme de U à bords relevés soudés à la feuille supérieure.

Par ailleurs, il est possible d'envisager que les plis formés par la feuille inférieure soient non pas suffisamment prononcés pour être soudés à la feuille supérieure, mais soient de moindre taille de façon telle que le produit expansé, dans un canal, puisse interférer avec celui du canal qui le jouxte.

Le produit défini ci-dessus constitué de n éléments comporte n-1 sollutions de continuité, soit autant de joints de dilatation.

Compte tenu de ce qui précède, le procédé qui fait l'objet de l'invention est essentiellement basé sur l'utilisation originale d'une gaine qui sert, à la fois, d'élément de transfert d'un produit passant par les états suivants : liquide, "crémeux", expansé à l'état mou, expansé à l'état dur, d'élément de calibrage à l'état liquide, d'élément de calibrage à l'état expansé, d'élément de cloisonnement d'un élément composé d'unités identiques juxtaposées, de moyen de soudure avec d'autres produits qu'il est possible d'adjoindre éventuellement en fin de processus de polymérisation, ainsi que de moyen d'emballage du produit fini.

Selon l'invention, la feuille inférieure en forme de U peut être constituée à partir d'un film enroulé sur une bobine puis thermoformée ; on peut également disposer d'une bobine dont le déroulement donne un élément ayant cette forme ; on peut, enfin, utiliser une gaine aplatie et embobinée dont on refend la partie supérieure afin d'obtenir la forme d'un U à bords relevés.

Après la mise en forme de ce canal de transfert, on y dépose le liquide à expanser et le cas échéant, un ou plusieurs matériaux rigides devant être intégrés à la mousse charge, fibres de verre, profilés, parement(s) inférieur(s).. par coulée ou projection.

A ce moment, le liquide répandu envahi toute la largeur du canal de façon régulière en épaisseur. Le produit liquide se transforme ensuite en crème et ne peut plus, dès lors, voir son épaisseur varier sur sa longueur pendant la translation du canal.

A ce moment, il ne reste plus qu'à poser sur les bords relevés du U, un deuxième film dont on soude les bords avec la feuille précédente.

On obtient ainsi un caisson continu dont la partie supérieure calibre et aplatit la partie supérieure de la mousse en état de mousse molle, puis, après polymérisation, devenant dure et ayant la section désirée.

La partie supérieure est maintenue par des rouleaux qui donnent au produit la section que l'on désire obtenir en fin de polymérisation. La partie inférieure est soutenue par une succession de rouleaux dont les derniers, conduits, tractent l'ensemble de la gaine.

Selon l'invention, il est possible d'introduire des éléments étrangers à la mousse dans le liquide précédent l'état de mousse ; on peut également déposer sur la mousse un ou des éléments rigides ou souples avant que le film supérieur ne se pose sur la mousse. Il est également possible de poser un ou plusieurs parement(s) sur le fond de la partie inférieure du canal ou sur la partie inférieure de la mousse ou un élément de séparation vertical.

Dans le cas d'un canal modulaire à n éléments, on peut ainsi envisager d'associer au cloisonnement longitudinal, un cloisonnement transversal pouvant être effectué en déposant en phase liquide ou phase crème, un produit rigide, semi-rigide ou souple posé verticalement.

On peut aussi imaginer de déposer transversalement un filet de plastifiant liquide créant un élément expansé d'une épaisseur suffisante pour créer une cloison transversale souple ou semi-rigide servant de joint de dilatation.

Le cloisonnement chimique utilisé dans le sens transversal pourraît également être utilisé dans le sens longitudinal, mais dans ce dernier sens, il est aussi nécessaire d'avoir un cloisonnement physique afin d'obtenir des coulées qui se répartissent de façon homogène, puisque de faible largeur.

Compte tenu de ce qui précède, le procédé objet de l'invention se distingue de l'art antérieur en ce que le contact de la partie supérieure de la gaine continue n'a pas lieu au moment de la fermeture, pendant la période liquide, mais pendant la fin du moussage.

Selon l'invention, le film supérieur peut être poreux à l'air et non au liquide de façon à permettre à l'air ou au gaz produit pendant le moussage de s'échapper par la face supérieure. La gaine peut, également, être trouée par endroits afin de laisser une partie de la mousse constituer des cloques extérieures à la gaine.

Cette dernière peut adhérer aux mousses de polyuréthane, polyisocyanurate, phénoliques, furaniques, etc... ou au contraire ne pas y adhérer par les moyens appropriés.

Une variante du procédé décrit ci-dessus peut avantageusement être utilisée pour la fabrication de panneaux composites plans, plus particulièrement destinés à revêtir les parois verticales de pièces d'habitation.

De tels panneaux sont particulièrement intéressants pour revêtir les parois verticales de pièces particulièrement exposées telles que les cuisines, les salles de bains ou les chambres d'enfant ; ils peuvent également être utilisés pour des surfaces horizontales, notamment des bureaux ou même pour recouvrir des parois extérieures telles que des façades de bâtiments.

L'utilisation de tels panneaux composites à surfaces peu fragiles et lavables a déjà été proposée pour revêtir les murs de pièces fréquemment salies telles que les cuisines et les salles de bains. De tels revêtements doivent pouvoir résister à d'importantes variations de températures de l'ordre de -10 à +70°C, et avant tout à une humidité très importante.

Pour cette raison, les seules solutions acceptables consistent à utiliser des matériaux supports onéreux et une méthode de pose exigeant des professionnels hautement qualifiés et multiples. Cette exigence augmente le prix de revient des revêtements jusqu'à des valeurs souvent inacceptables.

Parallèlement, on a déjà proposé, avant tout dans un but d'isolation, de revêtir les murs de pièces d'habitation de panneaux composites du type "PLACOPLATRE" (marque déposée) possédant une face interne notamment à base de mousse susceptible d'être fixée directement sur des parois verticales à l'aide de plots de plâtre et une face externe en plâtre. De tels panneaux sont particulièrement avantageux pour ce qui est du prix de revient de leur pose, étant donné que celle-ci exige une main d'oeuvre peu onéreuse, constituée uniquement par un plâtrier gâchant le plâtre, mais n'ayant pas à le lisser, aucun autre corps de métier n'intervenant quel que soit l'état de surface du mur.

Cependant, de tels panneaux doivent, obligatoirement après leur mise en place, être réunis au moyen d'un enduit, puis être revêtus par un élément de finition décoratif coûteux en matière et en main d'oeuvre.

De plus, de tels revêtements ne sont pas insensibles à l'humidité ; ils sont donc inutilisables dans les salles de ·bains dans lesquelles le plâtre risquerait à la longue de se décoller.

Un autre inconvénient de ce type de panneaux est lié à leur épaisseur qui entraaîne une diminution non négligeable de la surface habitable.

La présente invention se propose de remédier à ces inconvénients par la mise au point d'un panneau composite peu coûteux pour ce qui est de sa fabrication et de sa pose, susceptible de résister à l'importantes variations de températures et à une atmosphère très humide, permettant par suite son utilisation dans une salle de bain et pouvant être utilisé tel quel, c'est-à-dire sans habillage final.

A cet effet, l'invention concerne un panneau composite du type ci-dessus, caractérisé en ce qu'il se compose d'une âme en une mousse synthétique produite sur place par expansion à partir d'une résine liquide à laquelle on a ajouté les additifs classiques, d'une couche externe ayant uen face avant décorative et une face arrière sur laquelle adhère la mousse, ainsi que d'une couche interne synthétique adhérant à la mousse par sa face avant et dont la face arrière est revêtue d'un voile de fibres destiné à permettre un accorchage mécaniquement sûr et physiquement résistant du panneau sur les parois devant être revêtues, notamment par l'intermédiaire de plots de plâtre, la face avant décorative du panneau, ainsi que ses chants étant recouverts par un film thermoplastique de protection étanche, de préférence en polyéthylène, coopèrant avec la face avant de la couche interne à laquelle il est fixé par ses extrémités pour constituer une gaine limitant la mousse dans son expansion et desinté à être retiré par arrachage après la mise en place du panneau.

Donc, le panneau selon l'invention est prêt à être utilisé directement. Il peut être posé très facilement même par l'utilisateur lui-même, pour un prix de revient modique.

Bien entendu, la longueur et la largeur des panneaux selon l'invention peuvent être quelconques et dépendent, d'une part, du matériel employé et, d'autre part, des besoins et de l'esthétique recherchée qui peut, par exemple correspondre à un aspect du type lattes de bois ; néanmoins, une largeur inférieure à 1 m est considérée comme souhaitable.

Conformément à l'invention, la mousse est donc formée "in situ" à l'intérieur de la gaine définie par la couche interne et le film thermoplastique de protection qui doit, obligatoirement, être non rétractable, et peut, le cas échéant, être poreux à l'air et non aux liquides, de façon à permettre à l'air ou aux gaz pouvant être produits pendant la réaction d'expansion de séchapper vers l'extérieur.

Il s'agit là en fait de l'opération d'expansion classique par laquelle le produit initialement liquide passe successivement à l'état "crémeux" puis à l'état de mousse molle et enfin à l'état de mousse dure.

La mousse utilisée selon l'invention doit être telle que le panneau composite puisse être classée M1 selon la norme C.S.T.B. Pour ce, on peut choisir en tant que produit de départ des polyisocyanurates et/ou des résines phénoliques ou furaniques, le cas échéant renforcés par incorportation avant polymérisation d'un voile de fibres de verre. Les polyuréthanes ne peuvent, quant à eux, pas être utilisés tels quels, mais doivent obligatoirement être renforcés notamment par incorporation de fibres de verre.

Bien entendu, l'invention n'est pas limitée aux exemples de produits moussants mentionnés ci-dessus, et l'utilisation de tout produit moussant y compris du béton cellulaire, peut être envisagée sans pour cela sortie du cadre de l'invention.

Conformément à l'invention, le voile de fibres utilisé le plus courrament est un voile de fibres de verre.

Selon une autre caractéristique de l'invention, la couche interne est constituée par un film plastique, notamment en polyéthylène sur lequel est fixé le voile de fibres de verre, notamment par thermosoudage.

Il est essentiel que le voile de fibres de verre soit parfaitement soudé par l'une de ses faces au film en polyéthylène, mais en soit suffisamment dégagé par son autre face pour que les fibres soient susceptibles de s'accrocher aux plots de plâtre disposés sur la surface de la paroi à revêtir, améliorant ainsi la rigidité de la fixation du panneau, et sa résistance à l'humidité ainsi qu'aux écarts de températures.

Selin l'invention, il est possible d'utiliser, en tant que couche interne, un produit composite du commerce voile de verre/polyéthylène, dans lequel une extrémité de certaines fibres est accrochée au polyéthylène tandis que leur autre extrémité est libre et peut contribuer à la fixation du panneau sur le plâtre.

Selon une autre caractéristique de l'invention, la couche externe est en une matière plastique stratifiée à moulage par compression à base de feuilles de remplissage imprégnées de résine phénolique constituant sa face arrière et de feuilles de recouvrement à base de mélamine constituant sa face avant décorative, la face arrière de cette couche ayant été préalablement poncée.

Le produit du type correspond à la définition ci-dessus est celui commercialisé sous le nom de FORMICA (marque déposée).

L'expansion de la mousse à même la surface poncée de ce produit assure automatiquement sa liaison avec la mousse.

On a déjà proposé un procédé continu permettant d'obtenir du FORMICA en rouleau. Cepdnant, on s'est aperçu que les propriétés du produit ainsi obtenu étaient inférieures à celles du produit obtenu par le procédé classique et ne lui permetaient pas, par exemple d'être utilisé pour des revêtements horizontaux tels que des tables ou des bureaux, en raison notamment de son manque de résistance à l'abrasion.

Or, il s'est avéré que le FORMICA en rouleau produit en continu peut parfaitement être utilisé dans le cadre de l'invention. Selon l'invention, on peut choisir un produit d'épaisseur de 6 à 15 mm, fonction de la densité de la mousse, afin de remplir les conditions dictées par le C.S.T.B., en ce qui concerne les résistances aux chocs (billes, sacs de sable) et un module d'élasticité du complexe compatible avec le système de pose. On pourrait même envisager d'utiliser un produit d'épaisseur nettement moindre, donc plus économique, en le combinant à une mousse non-homogène, obtenue en deux étapes et constituée par une première couche très dense de faible épaisseur (environ 5 mm) adhérant à la couche externe et par une seconde couche très volumineuse d'une épaisseur de l'ordre de 3 cm de densité très faible adhérant à la couche interne ; dans ce cas, la première couche dure contribue à la résistance aux chocs et permet donc l'utilisation pour la couche externe d'un produit plus mince.

Bien entendu, malgré ces avantages, l'invention n'est pas limitée à l'utilisation, pour la couche externe, du matériau défini ci-dessus ou même d'un matériau stratifié ; on peut, en effet, utiliser aussi bien un matériau plastique minéral ou métallique pourvu qu'il soit continu.

Selon une autre caractéristique de l'invention, les chants du panneau sont recouverts d'une couche d'un produit anti-adhérent, notamment en silicone, placé au-dessous du film de protection pour faciliter son arrachage après la fixation du panneau sur la paroi. Ainsi, après l'expansion, les chants du panneau se trouvent revêtus d'une "peau" lisse de mousse.

Selon une autre caractéristique de l'invention, les extrémités de la face avant décorative de la couche externe sont revêtues, au moins sur une faible largeur, d'une matière autocollante permettant sa fixation au film de protection pour empêcher tout débordement de résine vers l'avant lors de son expansion.

L'utilisation de bandes de matière auto-collante de faible largeur aux extrémités de la face avant de la couche externe permet de diminuer au maximum la quantité de cette matière qui doit être utilisée, et donc d''abaisser le prix de revient de l'ensemble du panneau ; cependant, il existe dans le commerce des films déjà revêtus, sur toute leur surface, d'une matière autocollante dont l'utilisation peut également être envisagée dans le cadre de l'invention.

Dans tous les cas, après la mise en place du panneau, pour effectuer la "finition" de la paroi, il suffit de dépouiller de son film de protection la surface décorative par arrachage de la partie auto-collante et de la partie siliconée qui protégeaient ses chants.

On a ainsi une surface totalement terminée pouvant être laissée telle quelle sans nécessiter la pose d'enduit ou de couche de protection ou de recouvrement supplémentaire.

Pour améliorer encore l'emboîtement des panneaux

les uns dans les autres, et selon une autre caractéristique de l'invention, les chants ont, alternativement, une section mâle et une section femelle.

De telles sections peuvent directement être obtenues par une opération de moulage continu des chants.

Selon une variante de l'invention, il est également possible d'utiliser, pour la couche externe, non pas une feuille plane, mais une feuille repliée en forme de U et constituant à la fois la face avant et les chants du panneau.

En effet, comme indiqué ci-dessus, il existe dans le commerce des panneaux du type "FORMICA" (marque déposée) ayant une largeur nettement inférieure à ceux considérés précédemment (de l'ordre de 0,6 mm). Ces produits présentent l'avantage de pouvoir être post-formés avec un rayon de courbure de l'ordre de 5 à 6 mm, c'est-à-dire approximativement à angle droit. L'utilisation de telles couches externes en forme de cornières permet de conférer à l'ensemble du panneau un maximum de rigidité. Un autre avantage d'une telle utilisation est lié à la possibilité, pour une résistance égale, de diminuer notablement l'épaisseur du panneau, et donc, l'encombrement de l'ensemble tout en garantissant une esthétique satisfaisante.

Bien entendu, une telle diminution de l'épaisseur des panneaux ne pourra pas être envisagée si l'on cherche également à les utiliser pour leurs qualités d'isolation thermique et phonique.

Une difficulté rencontrée lors du post-formage des feuilles de "FORMICA" (marque déposée) pour donner à leurs bords une configuration en forme de U, est liée à la nécessité d'effectuer un chauffage local des extrémités de ces feuilles qui, entraîne, étant donné qu'elles ne sont pas conductrices de la chaleur, une dilatation locale et la formation, à la partie centrale de ces feuilles, de "ventres" risquant de nuire à l'esthétique finale du panneau.

0161982

15

Pour ne pas se heurter à de tels inconvénients, l'invention prévoit l'utilisation pour la couche externe de panneaux en "FORMICA" (marque déposée) du commerce auxquels est incorporée une feuille métallique, notamment en aluminium..

Selon une autre caractéristique de cette variante de l'invention, la face avant décorative de la couche externe en forme de U est revêtue d'une pellicule d'une matière autocollante permettant d'assurer la fixation de la couche externe au film de protection dont les extrémités recourbées vers l'extérieur permettent d'assurer la fixation de la face avant de la couche interne aux extrémités du film de protection.

La présence de cette pellicule autocollante permet de simplifier notablement la fabrication du panneau selon l'invention et donc de diminuer son prix de revient en supprimant l'opération de soudure du film de protection à la couche interne.

Un autre avantage de telles cornières est qu'elles existent dans le commerce déjà totalement préencollées.

Pour la fabrication d'un tel panneau, l'on forme, à partir d'un film thermoplastique non-rétractable mobile en translation sur un support quelconque, une gouttière en forme de U à bords relevés ayant une base destinée à recouvrir la face avant du panneau et deux branches latérales destinées à recouvrir ses chants, et dont la base a une largeur égale à celle du panneau désiré, de manière à obtenir un canal de transfert mobile, puis, on recouvre les extrémités de la partie interne de la base du U d'une matière autocollante sur une largeur d'environ 1 cm, on pose ensuite sur cette matière autocollante la couche externe du panneau, face décorative contre le film thermoplastique, après l'avoir ébarbé et avoir poncé sa face arrière, puis, on applique sur les branches latérales de la gouttière, une couche d'un produit anti-adhérent, par exemple de silicone, notamment à l'aide de tampons applicateurs, et l'on dépose, dans la partie interne de la gouttière, la résine liquide dont l'expansion induite par les additifs usuels est effectuée à l'air libre en étant limitée par les branches verticales de la gouttière, ensuite, on met en place la couche interne et on la soude à ses extrémités sur les bords de la gouttière.

Conformément à l'invention, la résine liquide à laquelle on a préalablement incorporé les additifs habituels peut être déposée par coulée ou, de préférence, projetée par pistolage sur la face poncée de la couche externe, sous la forme d'un jet plat. Pour effectuer cette projection, on utilise généralement des pistolets à double buse avec des chambres de mélange des composants séparés afin d'assurer une répartition constante du liquide. Chacun de ces pistolets couvre généralement une largeur d'environ 30 cm et une longueur de 2 à 3 cm dans le sens d'avancement de la gouttière. Le nombre de pistolets mis en batterie est de l'ordre de 3 pour un matériau de 90 cm de large par exemple.

En fonction de l'aspect final souhaité et notamment de la largeur du panneau, le film thermoplastique non-rétractable peut être formé de manière à définir non pas une seule gouttière mais plusieurs gouttières parallèles séparées chacune par un "pic" de matière thermoplastique revêtu extérieurement de produit anti-adhérent comme décrit ci-dessus. Cette disposition permet de mieux maîtriser l'expansion de la mousse et le cas échéant d'améliorer l'esthétique du panneau en permettant l'obtention de formes modulées.

Les caractéristiques du procédé ainsi que du panneau qui font l'objet de l'invention seront décrites plus en détail en se référant aux dessins annexés, dans lesquels

- la figure 1 est une coupe schématique montrant la mise en oeuvre du procédé conforme à l'invention,

- la figure 2 est une vue plus détaillée se rapportant à la phase d'étalement du produit liquide,

- la figure 3 est une vue en plan correspondant à la figure 2,

- les figures 4a à 4e sont respectivement des coupes transversales de la figure 1 suivant les axes A-B ; C-D ; E-F ; G-H ; I-J ; représentant les phases successives de l'élaboration d'un panneau par le processus conforme à l'invention :

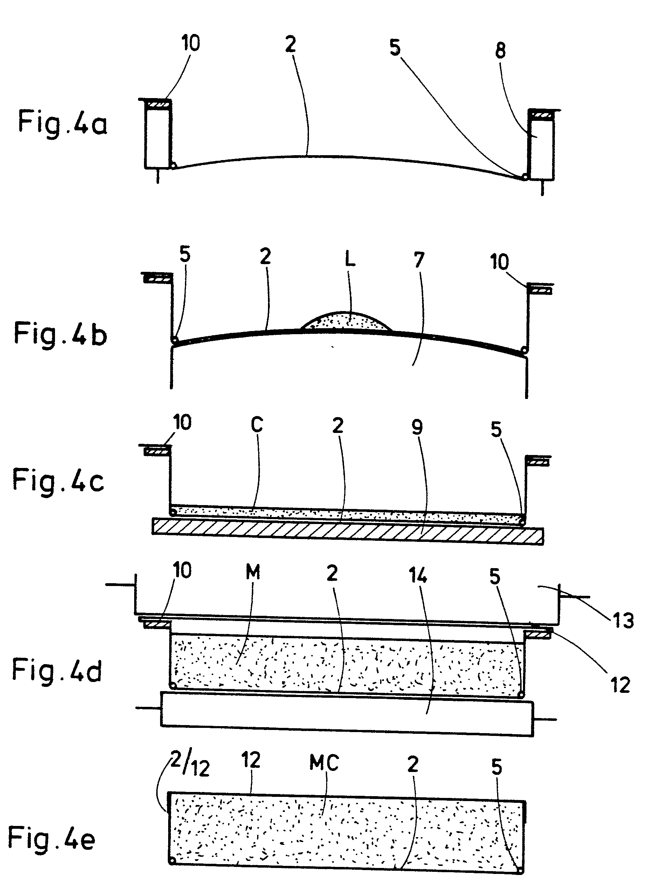

- la figure 4a représente la section de l'ensemble pendant la formation du canal continu,

- la figure 4b représente la section de l'ensemble lors du dépôt du liquide sur la partie inférieure du canal,

- la figure 4c représente la section de l'ensemble lorsque le liquide devient crémeux et remplit toute la largeur du canal,

- la figure 4d représente la section de la gaine alors que la mousse est en fin de formation ,

- la figure 4e représente la section finale du produit,

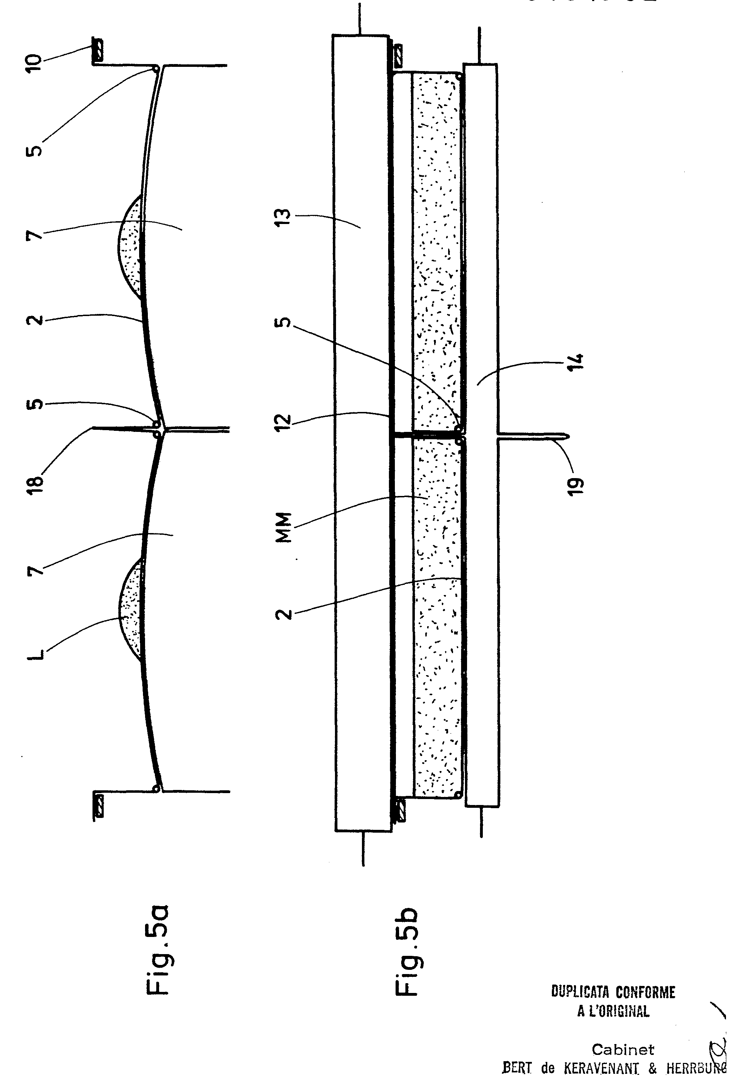

- les figures 5a et 5b sont respectivement des vues similaires aux figures 4b et 4c, dans le cas d'un canal formé par la juxtaposition de deux canaux modulaires,

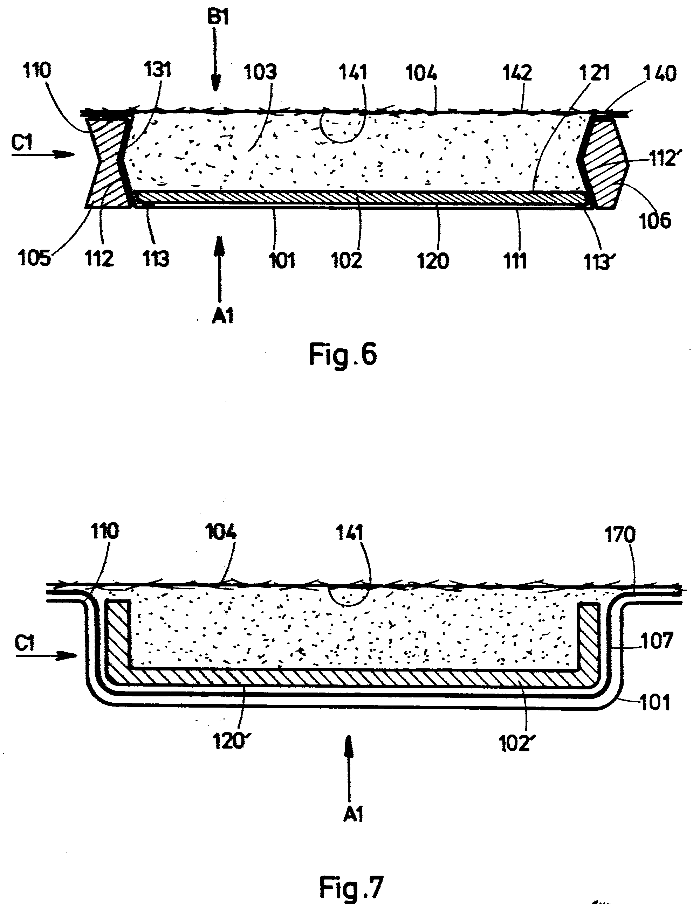

- la figure 6 représente, en coupe et en cours de fabrication, un panneau obtenu par la mise en oeuvre d'un panneau selon l'invention,

- la figure 7 est une vue en coupe d'un panneau correspondant à une variante de la figure 6.

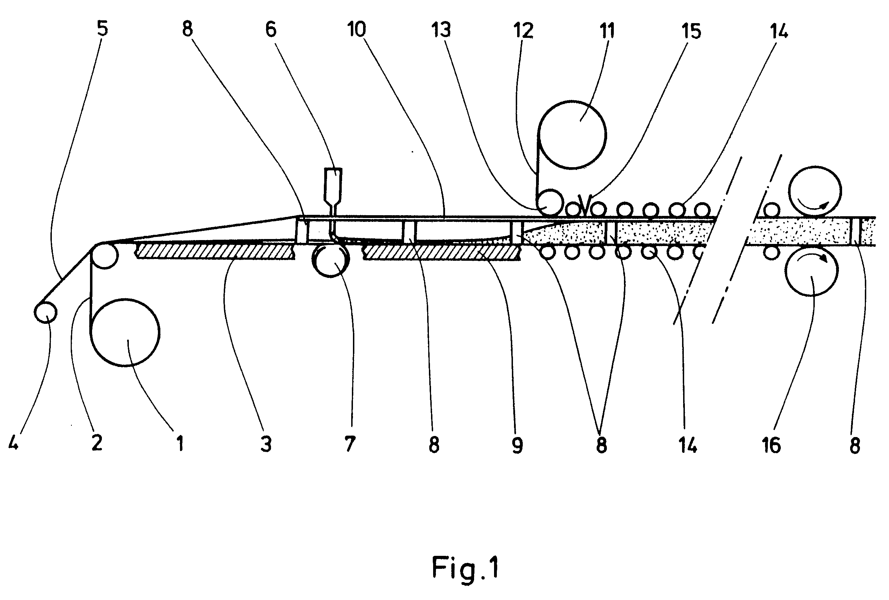

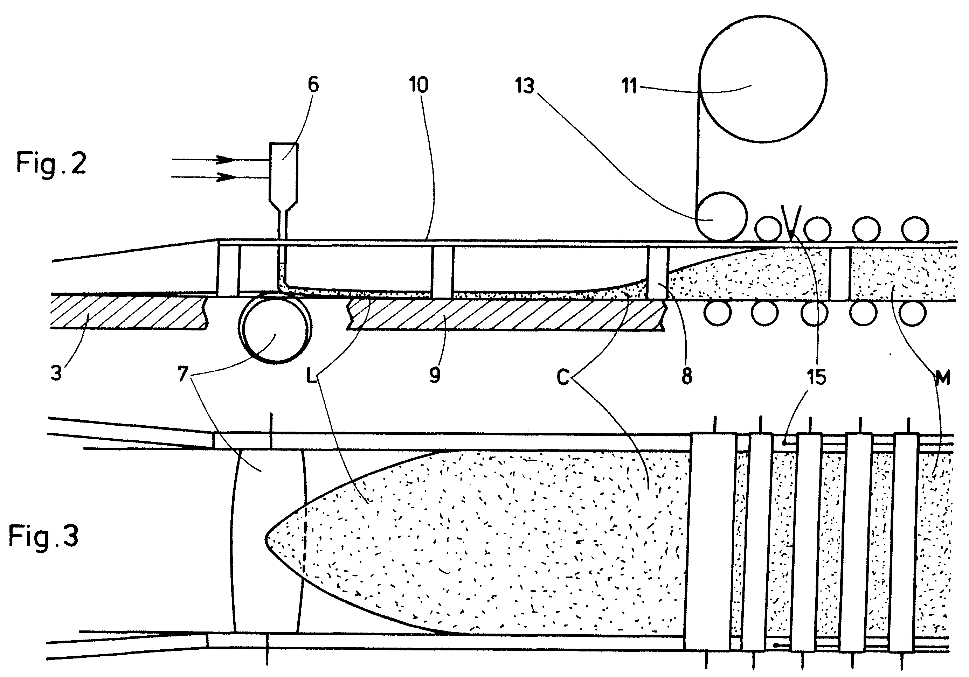

Selon l'invention, conforméments aux figures 1 à 4, on déroule, à partir d'une bobine 1, une feuille 2 qui sert de support, et, le cas échéant, de revêtement définitif à l'élément de mousse expansé.

On appellera feuille 2, la feuille préparée de façon à donner naissance à un canal continu ou à plusieurs comme dans le cas des figures 5a et 5b.

Cette feuille 2 est appliquée en tension sur un marbre 3 tandis que des fils 5 enroulés sur des bobines 4 correctement poistionnées permettent, à l'aide de galets verticaux 8, de former les deux branches verticales d'une gouttière en forme de U à bords relevés, dont les bords reposent sur une glissière 10. Le préchauffage de la feuille facilite le moulage continu. Elle repose sur un marbre qui peut être incliné.

Une tête de coulée 6 déverse le produit liquide fabriqué à partir de plusieurs composants sur la feuille 2 en un point où celle-ci est en contact avec un cylindre 7 déformé à courbure variable pouvant donner à la feuille 2 une forme bombée de sorte que le liquide s'étale rapidement vers les bords du canal.

En réglant le convexité de l'élément 7, on accroît la vitesse de l'établement ; éventuellement, on peut placer plusieurs éléments identiques à l'élément 7 si nécessaire à la suite les uns des autres. La coulée peut être remplacée par une projection au pistolet.

La feuille 2 se trouve ainsi recouverte d'une lame de résine sur le marbre 9 qui peut être incliné sur l'horizontale, cette lame étant ainsi calibrée, la vitesse de transfert et les éléments chimiques ayant été définis de manière appropriée, la résine liquide prend l'état crémeux tandis que la feuille est encore sur le marbre 9. Il n'y a plus alors de migration possible de la droite vers la gauche et vice versa de la "crème" et la mousse se forme en montant à la verticale.

Dès lors, intervient la pose de la deuxième feuille 12 enroulée sur la bobine 11 sur les rebords de la feuille 2 posés, eux-mêmes, sur la glissière 10. Un élément de soudure à chaud 15 soude les deux feuilles et le canal est ainsi transformé en caisson continu.

La mousse vient en contact de la feuille 12 et si les facteurs vitesse, composition chimique du mélange sont correctement réglés, la mousse adhère aux parois de la gaine. Des galets verticaux 8 et les rouleaux horizontaux 13 et 14 "forment" le produit expansé enrobé de la pellicule plastique à la forme désirée.

La surface de la feuille 12 peut être poreuse à l'air de façon à laisser échapper l'air ou les gaz qui auraient pu être enfermés.

Après la formation de la mousse, commencent la polymérisation et le durcissement du produit qui peut, enfin, être entraîné par des rouleaux 16.

S'il s'agissait de produire un produit souple, il serait nécessaire d'utiliser un double convoyeur pour assurer l'entraînement de l'ensemble.

Selon les figures 5a et 5b, pour l'obtention d'un produit de plus grande largeur, il est constitué deux canaux alimentés par deux têtes de coulée fixe, chaque canal étant séparé par un pli 18 fourni par la feuille 2 pliée sur elle-même, et les bords étant supportés par des disques 19 dont l'axe est perpendiculaire à la direction d'avancement de la gaine.

Le procédé décrit ci-dessus peut permettre la fabrication d'un panneau tel que représenté sur la figure 6 et se composant, de façon classique, d'une face avant $A_1$ constituée par une couche externe 102, d'une face arrière $B_1$ constituée par une couche interne 104 et de chants $C_1$.

Un film thermoplastique étanche 101 en polyéthylène à section approximativement en forme de U et dont les extrémités internes 110 sont rabattues vers l'extérieur du panneau recouvre la face avant $A_1$ ainsi que les chants $C_1$.

Comme on le verra plus en détail dans la suite de cet exposé, ce film 101 constitue une gaine de protection destinée à être enlevée par arrachage après la pose du panneau.

La base 111 ainsi que les branches latérales 112 et 112' du film en polyéthylène à section en forme de U,

0161982

20

définissent une gouttière qui est utilisée pour la fabrication du panneau.

Les extrémités latérales 113 et 113' du fond 111 de cette gouttière sont revêtues, sur une faible largeur de l'ordre de 1 cm, d'une matière autocollante, tandis que ses branches latérales 112, 112' sont recouvertes d'une couche d'un produit anti-adhérent, notamment de silicone.

La couche externe 102 du panneau 101 repose directement par sa face avant décorative 120 sur la face interne du film de protection 111 à laquelle elle est fixée grâce aux bandes 113 et 113' de matière autocollante.

Cette couche externe 102 est, de préférence, en une matière plastique stratifiée à moulage par compression à base de feuilles de remplissage imprégnées de résine phénolique constituant sa face arrière 121, qui a été préalablement poncée, et de feuilles de recouvrement à base de mélamine qui constituent sa face avant décorative 120.

Le produit caractéristique du type décrit ci-dessus est celui commercialisé sous le nom de "FORMICA" (marque déposée).

La face arrière poncée 121 de la couche externe 103 est recouverte d'une âme en mousse 103 constituée, de préférence, par un polyisocyanurate expansé déposé primitivement sous la forme de résine liquide et transformé "in situ" en une mousse sous l'action d'additifs habituels.

Pour renforcer cette mousse, on peut adjoindre à la résine liquide, au moment de son application, un voile de fibres de verre qui migre à l'intérieur de la mousse pendant la réaction d'expansion.

L'expansion "in situ" de la résine est limitée par la gaine constituée par les branches latérales 112, 112' du film de protection 101 et par la face arrière poncée 121 de la couche externe 102.

De manière classique, au cours de cette expansion la résine passe successivement de l'état liquide à l'état crémeux, puis à l'état de mousse molle et enfin à l'état de mousse dure.

A partir de l'état crémeux, la couche interne 104 est soudée par ses deux extrémités 140 aux bords rabattus 110 du film 102 en polyéthylène pour former la gaine décrite précédemment à l'intérieur de laquelle l'opération de polymérisation se termine pour constituer le panneau fini. La mousse 103 adhère sur la face arrière poncée 121 de la couche externe 102, ainsi que sur la face avant 141 de la couche interne 104 qui est, elle aussi constituée par un matériau synthétique thermoplastique susceptible d'être fixé au film 102 par thermosoudage.

La présence sur les extrémités latérales de la base 111 du film en polyéthylène des bandes autocollantes 113, 113' contribue à l'obtention d'un panneau donnant toute satisfaction en empêchant la pénétration de résine au-dessous de la couche externe 102.

De même, par suite de la présence sur les branches latérales 112, 112' d'un produit anti-adhérent notamment à base de silicone, il se forme en regard une peau 131 de résine qui permet d'enlever très facilement par arrachage le film de protection 102 après la pose du panneau et donc là aussi garantit l'obtention d'un panneau satisfaisant.

Par ailleurs, la face avant 141 de la couche interne 104, constituée par un film plastique notamment en polyéthylène, est revêtue par un voile de fibres de verre 142 fixé par thermosoudage.

La présence, dans ce voile, de fibres de verre ayant des extrémités libres, est de nature à améliorer la fixation de l'ensemble du panneau sur une paroi verticale par l'intermédiaire de plots d'un plâtre légèrement élastique, non représentés sur la figure, dont l'épaisseur, de l'ordre de 2 à 4 cm, dépend de l'état de surface de l'élément porteur, et doit être plus grande dans le cas d'un mur en briques ou en parpaings, que dans le cas d'une surface de béton banchée ou d'un plâtre lisse.

En conclusion, le panneau conforme à l'invention se compose, si l'on va de l'extérieur vers l'intérieur, de la couche externe dont la face avant 120 est décorative, de l'âme de mousse 103 et de la couche interne 104 dont la face arrière 142 est munie de fibres de verre facilitant son accrochage à une paroi verticale. La face arrière 121 de la couche externe 102 et la face avant 141 de la couche interne 104 sont susceptibles d'adhérer à la mousse lors de la formation de celle-ci.

Un film protecteur 102 recouvre la face avant 111 du panneau ainsi que ses chants 112 et 112', et est fixé par ses extrémités rabattues 110 aux extrémités 140 de la couche interne 104.

Après la pose, ce film protecteur doit être arraché, ce qui est extrêmement simple grâce, d'une part, à la formation de "peaux" de résine 131 sur les chants grâce à l'adjonction de produits anti-adhérents, et à la présence des bandes 113, 113' qui empêchent toute pénétration de résine au-dessous de la couche externe 102.

Les panneaux selon l'invention peuvent être posés directement côte à côte sur un mur vertical sans adjonction d'aucun enduit.

Pour permettre d'emboîter les uns dans les autres différents panneaux, les chants 112 et 112' d'un panneau ont, alternativement, une section mâle et une section femelle, obtenues grâce à l'utilisation de galets chauffants 105, 106 de forme correspondante lors de la fabrication.

Un tel panneau se fabrique par la mise en oeuvre d'un procédé tel que décrit ci-dessus. Pour ce, on forme, à partir d'un film thermoplastique non-rétractable 101 primitivement enroulé sur une bobine non représentée, une gouttière continue mobile et se déplaçant en translation sur un support quelconque non représenté à section en forme de U dont la base 111 est destinée à recouvrir la face avant $A_1$ du panneau et dont les deux branches latérales 112 et 112' sont destinées à recouvrir ses chants $C_1$.

Les bords latéraux 110 du film 101 sont relevés pour permettre leur fixation ultérieure aux extrémités 140 de la couche arrière 104 destinée à former la face arrière $B_1$ du panneau.

Ensuite, pour préparer l'opération d'expansion et de polymérisation d'une résine liquide 103, les extrémités 113 et 113' de la partie interne de la base 111 du film 101 sont enduites d'une matière autocollante sur une largeur d'environ 1 cm, tandis que ses branches latérales 112 et 112' sont revêtues d'une couche d'un produit anti-adhérent.

Lorsque la gouttière a été préparée de cette manière, on pose sur son fond 111, la couche externe 102 de façon telle que la face décorative 120 repose contre le film 101. Cette couche externe 102, qui a été préalablement ébarbée et poncée sur sa face arrière 121, peut, le cas échéant, provenir directement d'un processus de fabrication en continu, et donc être elle-aussi préalablement enroulée sur un rouleau non représenté.

A ce moment du processus, on projette sur la face arrière 121 de la couche externe 102, et à l'aide d'un ensemble de pistolets à deux buses, les deux composants $\underline{a}$ et $\underline{b}$ d'une résine liquide dont un exemple sera indiqué ci-après.

Pendant la translation de la gouttière, cette résine se polymérise à l'air libre, en étant uniquement limitée par la face interne 121 de la couche externe 102 et par les branches latérales 112 et 112' siliconées du film 101.

Lorsque le produit a atteint la consistance "crémeuse", on ferme la gaine en déroulant, à partir d'une bobine non représentée, la couche interne 104 dont les extrémités 140 sont soudées sur les bords de la gouttière.

L'invention permet donc la fabrication en continu de ces panneaux.

Le cas échéant, et pour obtenir des chants $C_1$ à section mâle ou femelle, des galets 112 et 112' de forme convenable sont prévus de part et d'autre du support sur lequel se déplace la gouttière.

Selon la figure 7, la couche externe n'est pas plane, mais est constituée par une feuille 102' notamment en "FORMICA" (marque déposée) d'une épaisseur de l'ordre de 0,6 mm repliée en forme de U de manière à constituer non seulement la face avant A du panneau mais aussi ses chants $C_1$.

Cette forme de cornière qui a été obtenue grâce à un postformage préalable de la feuille 102' est de nature à conférer à l'ensemble du panneau un maximum de rigidité.

La face avant décorative 120' de la couche externe 102' est totalement revêtue d'une pellicule d'une matière autocollante 107 permettant d'assurer sa fixation au film de protection 101 destiné à être arraché après la pose du panneau.

Les extrémités 170 de la pellicule autocollante sont recourbées vers l'extérieur de manière à pouvoir être utilisées pour assurer la fixation de la face avant 141 de la couche interne 104 et des extrémités 110 du film de protection 101.

Cette configuration permet d'éviter l'adjonction d'une couche anti-adhérente au niveau des chants.

EXEMPLE DE COMPOSITIONS DE RESINES LIQUIDES

### Composant a

| | % en poids |
|---|---|
| - Polyisocyanate | 71,2 |
| - Agent tensio-actif | 1,1 |
| - Agent de soufflage | 15,0 |

## Composant b

| | % en poids |
|---|---|
| - Polyols | |
|   - diéthylène glycol anhydre | 5,4 |
|   - triol | 0,9 |
|   - diol | 5,3 |
| - Catalyseurs | |
|   - sel d'amine | 0,5 |
|   - carboxylate métallique | 0,1 |
|   - diméthylaminométhyl phénol | 0,4 |

26

<u>R E V E N D I C A T I O N S</u>

1°) Procédé de fabrication de produits constitués au moins en partie de matériau expansé, caractérisé en ce que l'on dépose le matériau par coulée sous forme liquide sur la partie inférieure d'une feuille inférieure souple moulée en forme de U à bords relevés de manière à définir un canal de transfert continu.

2°) Procédé selon la revendication 1, caractérisé en ce que l'on dépose une deuxième feuille souple supérieure sur les bords de la feuille inférieure en forme de U, et on soude ensemble ces deux feuilles lorsque le produit expansé a atteint une structure molle.

3°) Procédé selon la revendication 2, caractérisé en ce que la soudure des deux feuilles est effectuée par thermosoudure au moyen de deux galets chauffants, définissant ainsi un caisson mobile longitudinalement.

4°) Procédé selon les revendications 1 à 3, caractérisé en ce que l'on dépose des éléments additifs, notamment des charges renforts ou parements soit en phase liquide soit en phase de mousse molle.

5°) Procédé selon l'une quelconque des revendications 1 à 4, caractérisé en ce que l'avancement de l'ensemble qui constitue le caisson mobile est obtenu par traction sur le produit fini après durcissement de la mousse.

6°) Procédé selon l'une quelconque des revendications 1 à 5, caractérisé en ce que l'on juxtapose des canaux de transfert unitaire en utilisant une feuille inférieure à n canaux alimentés chacun par une tête de coulée de même débit chacune, la feuille supérieue étant soudée aux deux bords de la feuille inférieure.

7°) Procédé selon l'une quelconque des revendications 1 à 6, caractérisé en ce que la feuille supérieure est perméable à l'air ou à l'air et au liquide.

8°) Procédé selon l'une quelconque des revendications 1 à 6, caractérisé en ce que le produit expansé est totalement isolé de l'ambiance extérieure.

9°) Panneau composite plan susceptible d'être fabriqué par le procédé selon l'une quelconque des revendications 1 à 8, et destiné plus particulièrement à revêtir les parois verticales de pièces d'habitation, notamment de cuisines, de salles de bains ou de chambres d'enfant, caractérisé en ce qu'il se compose d'une âme en une mousse synthétique produite sur place par expansion à partir d'une résine liquide à laquelle on a ajouté les additifs classiques, d'une couche externe ayant une face avant décorative et une face arrière sur laquelle adhère la mousse ainsi que d'une couche interne synthétique adhérant à la mousse par sa face avant et dont la face arrière est revêtue d'un voile de fibres destiné à permettre un accrochage mécaniquement sûr et physiquement résistant du panneau sur les parois verticales devant être revêtues, notamment par l'intermédiaire de plots de plâtre, la face avant décorative du panneau ainsi que ses chants étant recouverts par un film thermoplastique de protection étanche, de préférence en polyéthylène coopèrant avec la face avant de la couche interne à laquelle il est fixé par ses extrémités pour constituer une gaine limitant la mousse dans son expansion et destiné à être retiré par arrachage après la mise en place du panneau.

10°) Panneau composite selon la revendication 9, caractérisé en ce que la mousse est choisie dans le groupe formé par les polyisocyanurates, les résines phénoliques ou furaniques et les polyuréthanes, le cas échéant, renforcés par des fibres de verre.

11°) Panneau composite selon l'une quelconque des revendications 9 et 10, caractérisé en ce que le voile de fibres est un voile de fibres de verre.

12°) Panneau composite selon l'une quelconque des revendications 9 à 11, caractérisé en ce que la couche interne est constituée par un film plastique, notamment en polyéthylène sur lequel est fixé le voile de fibres de verre.

13°) Panneau composite selon l'une quelconque des revendications 9 à 12, caractérisé en ce que la couche externe est une matière plastique stratifiée à moulage par compression à base de feuilles de remplissage imprégnées de résine phénolique constituant sa face arrière et de feuilles de recouvrement à base de mélamine constituant sa face avant décorative, la face arrière de cette couche ayant été préalablement poncée.

14°) Panneau composite selon l'une quelconque des revendications 9 à 13, caractérisé en ce que ses chants sont recouverts d'une couche d'un produit anti-adhérent, notamment de silicone, placé au-dessous du film de protection pour faciliter son arrachage après la fixation du panneau sur la paroi.

15°) Panneau composite selon l'une quelconque dess revendications 9 à 14, caractérisé en ce que les extrémités de la face avant décorative de la couche externe sont revêtues sur une faible largeur d'une matière autocollante permettant sa fixation au film de protection pour empêcher tout débordement de résine vers l'avant lors de son expansion.

16°) Panneau composite selon l'une quelconque des revendications 9 à 15, caractérisé en ce que ses chants ont alternativement une section mâle et une section femelle afin de faciliter la mise en place côte à côte des panneaux sur la paroi et leur emboîtement les uns dans les autres.

17°) Panneau composite selon l'une quelconque des revendications 9 à 16, caractérisé en ce que la couche externe est repliée en forme de U et constitue la face avant ainsi que les chants du panneau.

18°) Panneau composite selon la revendication 17, caractérisé en ce que la face avant décorative de la couche externe en forme de U est revêtue d'une pellicule d'une matière autocollante permettant d'assurer la fixation de la couche externe au film de protection et dont les extrémités recourbées vers l'extérieur permettent d'assurer la fixation de la face avant de la couche interne aux extrémités du film de protection.

19°) Procédé mis en oeuvre pour la fabrication du panneau selon l'une quelconque des revendications 9 à 18, caractérisé en ce que l'on forme, à partir d'un film thermoplastique non rétractable, une gouttière en forme de U à bords relevés ayant une base destinée à recouvrir la face avant du panneau et deux branches latérales destinées à recouvrir ses chants, et dont la base a une largeur égale à celle du panneau désiré de manière à obtenir un canal de transfert mobile en translation, puis on recouvre les extrémités de la partie interne de la base du U d'une matière autocollante sur une largeur d'environ 1 cm, on pose ensuite, sur cette matière autocollante, la couche externe du panneau, face décorative contre le film thermoplastique, après l'avoir ébarbée et avoir poncé sa face arrière, puis, on applique, sur les branches latérales de la gouttière, une couche d'un produit anti-adhérent, par exemple de silicone, notamment à l'aide de tampons applicateurs, et l'on dépose dans la partie interne de la gouttière, la résine liquide dont l'expansion est effectuée à l'air libre en étant limitée par les branches verticales du U, ensuite on met en place la couche interne et on la soude à ses extrémités sur les bords de la gouttière.

20°) Procédé selon la revendication 19, caractérisé en ce que l'on projette la résine liquide dans la gouttière par pistolage.

ORIGINAL

Cabinet
BERT de KERAVENANT & HERRBURGER

0161982

Fig.1

Fig.2

6    10    13    11

3    7    L    9    C    8    15    M

Fig.3

Fig.4a

Fig.4b

Fig.4c

Fig.4d

Fig.4e

415

0161982

Fig.5a

Fig.5b

0161982

B1

110     131     103     141     104     142     121     140

C1

112´

106

105    112    113     101    102    120    111    113´

A1

## Fig.6

110     104     141     170

C1

107

101

120´      102´

A1

## Fig.7